# EUROPÄISCHE PATENTANMELDUNG

(11) **EP 1 004 382 A1**
(43) Veröffentlichungstag der Anmeldung: **31.05.2000**
(21) Anmeldenummer: 98120631.1
(22) Anmeldetag: 02.11.1998
(51) Int. Cl.: B23D 37/22, B23Q 3/155

(54) **Räummaschine mit mindestens einem linear bewegbaren Werkstückträger und ein Werkzeugmagazin**

(71) Anmelder: Heitec Auerbach GmbH, 08209 Auerbach (DE)
(72) Erfinder: Meinel, Rudolf, Dipl.-Ing., 08248 Klingenthal (DE)

(57) **Zusammenfassung**

Die Erfindung betrifft eine Vorrichtung zum Räumen des Profiles in Schloßkernen (14) für Zylinderschlösser mit mindestens einem linear bewegbaren Werkstückträger (8,9,10) und mehreren Werkzeugmagazinen (5), welche eine leistenförmige Gestalt haben und so angeordnet sind, daß sich ihre Speicherebene parallel zur Räumbahnebene und orthogonal zur Bewegungsrichtung des Werkstückträgers (8,9,10) erstreckt. Dabei sind die Werkzeugmagazine (5) nebeneinander und parallel zur Bewegungsrichtung des Werkstückträgers (8,9,10) angeordnet und orthogonal zu dieser Bewegungsrichtung bewegbar.

## Beschreibung

Die Erfindung betrifft eine Räummaschine zum Räumen des Profiles in Schloßkernen für Zylinderschlösser gemäß dem Oberbegriff des Anspruches 1. Dabei kann es sich sowohl um eine Horizontal- wie auch eine Vertikalräummaschine handeln.
Eine Vertikalräummaschine für diesen Zweck wird mit DE-PS 4342815 beschrieben. Sie weist eine Anzahl von Magazinen auf, die Ketten oder Zahnriemen als Werkzeugträger besitzen. Die Speicherebene jedes Magazins liegt horizontal. Die Speicherebenen der Magazine sind zueinander parallel in Etagen übereinander angeordnet. Da die Ketten oder Zahnriemen relativ flexibel sind, ist allein durch sie eine genaue Positionierung jedes Werkzeuges in seiner Arbeitsposition nicht möglich. Infolgedessen ist in dieser Arbeitsposition eine gesonderte Einrichtung zum Fixieren des Werkzeuges erforderlich.
Dafür ist ein materieller und für den Vorgang des genauen Positionierens und Fixierens ein zeitlicher Aufwand erforderlich, der die Kosten für das Räumen je Werkstück belastet. Auch hat sich allgemein im Werkzeugmaschinenbau erwiesen, daß mechanische Verriegelungen früher oder später einem Verschleiß unterliegen. Das Profil in den genannten Schloßkernen muß jedoch mit hoher Wiederholgenauigkeit herstellbar sein. Also ist es notwendig, früher oder später die Einrichtung zum mechanischen Fixieren zu erneuern oder so zu gestalten, daß sie selbsttätig Verschleiß ausgleicht.
Beides erfordert wiederum kostenverursachenden Aufwand. Der Aufbau des Werkzeugmagazins ist an sich relativ aufwendig. Hinzu kommt, daß jedes Magazin bei einem Werkzeugwechsel linear verfahren werden muß, bevor das nächste benötigte Werkzeug zur Positionierung bereit gestellt werden kann.
Das heißt, der Vorgang des Werkzeugwechsels gestaltet sich so, daß zunächst das nicht mehr benötigte Werkzeug von der Fixiereinrichtung freigegeben werden muß, dann muß das gesamte Magazin rechtwinkelig zur Räumbahn linear soweit verfahren werden, bis das Werkzeug aus der Räumbahn und aus der Fixiereinrichtung heraus gezogen ist Dann kann der Werkzeugträger (Kette oder Zahnriemen) soweit bewegt werden, bis das nächste angeforderte Werkzeug in der erforderlichen Position zur Fixiereinrichtung steht. Nun muß das gesamte Magazin wieder in Richtung Räumwerkzeugbahn in Fixierposition für das Werkzeug bewegt und danach die Indexiereinrichtung betätigt werden. Frühestens jetzt kann der nächste Räumvorgang beginnen. Dieser Ablauf erfordert sowohl einen relativ hohen materiellen als auch zeitlichen Aufwand.
Außerdem bringt die Konstruktion jedes Magazins zwangsweise einen relativ hohen Raumbedarf und natürlich auch entsprechendes Gewicht mit sich. Die Folge ist, daß der Anzahl Magazine an einer Maschine relativ enge Grenzen gesetzt sind.
Aufgabe der Erfindung ist es, relativ einfache Werkzeugspeicher zu schaffen und sie so zu gestalten und anzuordnen, daß eine relativ hohe Anzahl an einer Maschine vorgesehen und jeder Speicher mit einer Vielzahl von Werkzeugen bestückt werden kann. Dabei soll ein schneller Werkzeugwechsel und eine genaue Werkzeugpositionierung ohne spezielle Indexiereinrichtung möglich sein.
Insgesamt also soll der materielle und der zeitliche Aufwand für das Räumen je Schloßkern verringert werden.
Die Erfindung löst diese Aufgabe durch die im Hauptanspruch angegebenen Merkmale. Vorteilhafte Ausführungsformen sind in den Unteransprüchen gekennzeichnet.
Anhand eines Ausführungsbeispieles, hier eine Horizontalräummaschine, wird die Erfindung näher erläutert.

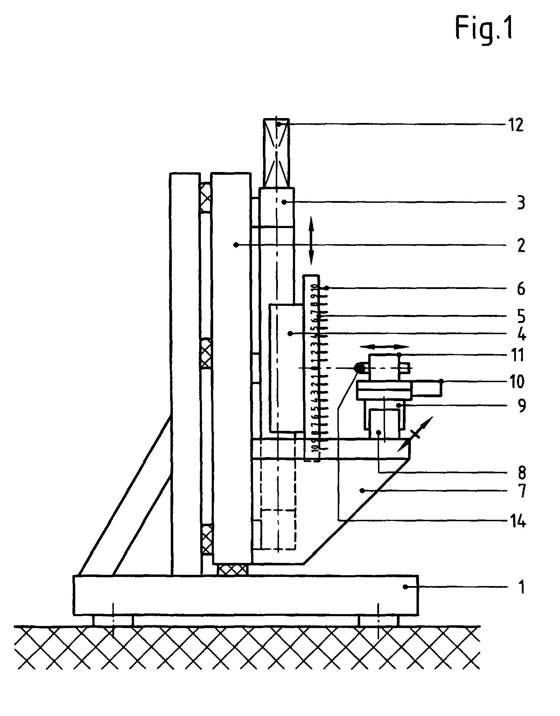

Die beigefügten Zeichnungen zeigen mit
Fig. 1 eine Seitenansicht der wesentlichen Maschinenbaugruppen
Fig. 2 eine Vorderansicht derselben

Ein winkelförmiger Maschinenständer 1 trägt eine Montageplatte 2, mit der vertikal verlaufende Linearführungen 3 form- und kraftschlüssig verbunden sind.

Jede Linearführung 3 nimmt einen Werkzeugschlitten 4 auf, der ein Werkzeugmagazin 5 trägt. Das Ausführungsbeispiel zeigt fünf Werkzeugmagazine 5 mit je zwanzig Räumwerkzeugen 6 und mit einem Leerplatz 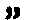 0".
Beiderseits des hier beispielsweise gezeigten Blocks mit fünf Werkzeugmagazinen 5 sind Konsole 7 angeordnet die eine Horizontalführung 8 für die Werkstückträgerbaugruppe tragen.
Diese besteht aus dem Werkstücklängshubschlitten 9, der auf der Horizontalführung 8 bewegbar ist, und den Werkstückquerhubschlitten 10 sowie der Werkstückspannvorrichtung 11.
Jede Linearführung 3 weist einen Stellmotor 12 auf, der über eine Kugelrollspindel mit dem Werkzeugschlitten 4 in Verbindung steht An der Horizontalführung 8 ist seitlich ein Servomotor 13 angeflanscht, der über ein nicht dargestelltes Kraftübertragungsmittel, z.B. einen Zahnriemen, auf den Werkstücklängshubschlitten 9 wirkt.

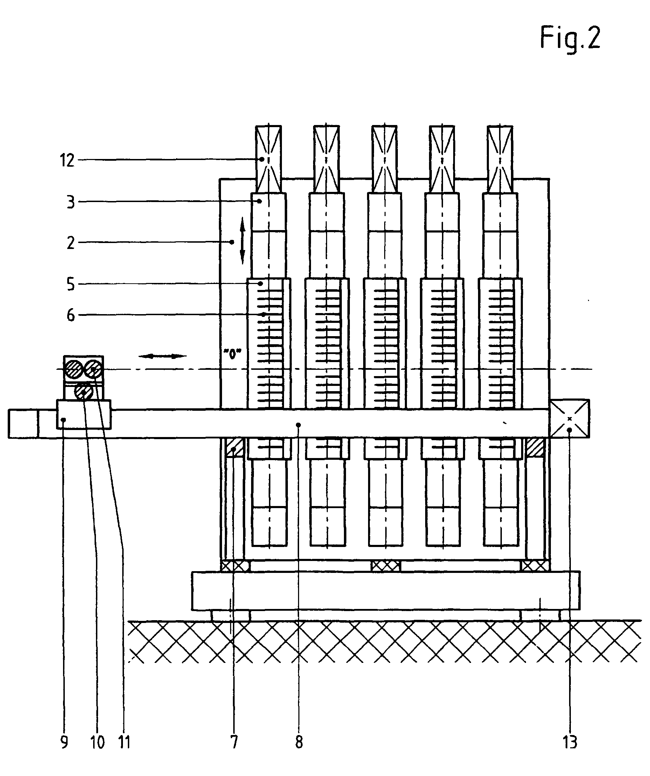

Fig. 2 zeigt daß die Werkstückspannvorrichtung 11 des Ausführungsbeispieles zwei Werkstücke 14, d.h. zwei Schloßkerne, nebeneinander aufnimmt. Außerdem zeigt Fig. 2 alle Werkzeugmagazine 5 in der gleichen Stellung, bei der sich der Leerplatz 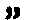 0" in der Räumebene befindet.
Durch die zur Maschine gehörende, nicht dargestellte Steuerung kann jedes der hier beispeilsweise vorgesehenen 100 Werkzeuge in der Räumebene positioniert werden, indem jedes Werkzeugmagazin 5 mittels seines Werkzeugschlittens 4 auf seiner Linearführung 3 entsprechend verfahren wird. So können, wie dargestellt, keine oder fünf Werkzeuge in der Räumbahn positioniert werden.
Der Funktionsablauf für einen Räumvorgang ist relativ einfach. Durch die Maschinensteuerung werden die dem zu räumenden Werkstück 14 zugeordneten Räumwerkzeuge 6 (Werkzeugplätze) aufgerufen, in die Räumebene bewegt und dort hochgenau positioniert. Die Werkstücke 14 werden durch einen Maschinenbediener oder über eine Zuführeinrichtung in die Werkstückspannvorrichtung 11 eingelegt und dort gespannt. Mittels Werkstückquerhubschlitten 10 und Werkstücklängshubschlitten 9 wird nun die Werkstückspannvorrichtung 11 in die Räumbahn gefahren und der erste Räumhub ausgeführt. Nach Abschluß des gesamten Räumvorganges befindet sich die Werkstückspannvorrichtung 11 wieder in ihrer Ausgangsposition. Die Werkstücke 14 werden ausgeworfen und ein neuer Zyklus kann beginnen.
Ein besonderer Vorteil der erfindungsgemäßen Lösung ist der einfache Aufbau des Werkzeugspeicherkomplexes mittels der Werkzeugmagazine 5 als einfache längsgeführte Leisten, die in einer relativ hohen Anzahl nebeneinander angeordnet sein können. Auch kann jedes Werkzeugmagazin 5 eine relativ hohe Anzahl von Werkzeugen aufnehmen. Die hier beispielsweise dargestellten zwanzig Werkzeugplätze nebst einem Leerplatz je Werkzeugmagazin 5 stellen nicht das Maximum dar.
Diese günstige Konstruktion des Werkzeugspeicherkomplexes erlaubt einen schnellen Werkzeugwechsel durch bloßes Längabewegen der Werkzeugmagazine 5. Dabei wird das Räumwerkzeug 6 aus seiner Warteposition unmittelbar und direkt in seine Arbeitspositionen bewegt Die exakte Positionierung und Fixierung des Werkzeuges in der Räumbahn erfolgt durch das hochpräzise und stabile Einzelführungssystem mittels CNC-Antrieb über Kugelrollspindel. Es ist also weder ein zusätzlicher Zeitaufwand noch ein zusätzlicher materieller Aufwand für das endgültige Positionieren und Fixieren des Werkzeuges in seiner Arbeitsstellung erforderlich.

### Aufstellung der verwendeten Bezugszeichen

- 1: Maschinenständer
- 2: Montageplatte
- 3: Linearführung
- 4: Werkzeugschlitten
- 5: Werkzeugmagazin
- 6: Räumwerkzeug
- 7: Konsol
- 8: Horizontalführung
- 9: Werkstücklängshubschlitten
- 10: Werkstückquerhubschlitten
- 11: Werkstückspannvorrichtung
- 12: Stellmotor
- 13: Servomotor
- 14: Werkstück

## Patentansprüche

1. Räummaschine zum Räumen des Profils in Schloßkernen für Zylinderschlösser mit mindestens einem linear bewegbaren Werkstückträger und mehrerem Werkzeugmagazinen
dadurch gekennzeichnet, daß
die Werkzeugmagazine (5) als leistenförmige Werkzeugträger ausgebildet sind, deren Speicherebene sich parallel zur Räumbahnebene und orthogonal zur Bewegungsrichtung des Werkstückträgers (8,9,10) erstreckt, wobei die Werkzeugmagazine (5)
parallel zu dieser Bewegungsrichtung nebeneinander angeordnet und orthogonal zu dieser Bewegungsrichtung bewegbar sind.

2. Räummaschine nach Anspruch 1, dadurch gekennzeichnet,
daß jedes Werkzeugmagazin (5) separat bewegbar ist.

3. Räummaschine nach Anspruch 1 oder 2, dadurch gekennzeichnet,
daß jedes Werkzeugmagazin (5) einen Leerplatz aufweist.

4. Räummaschine nach einem der Ansprüche 1 bis 3, dadurch gekennzeichnet,
daß jedes Räumwerkzeug (6) mit dem Werkzeugmagazin (5) form- und kraftschlüssig aber lösbar verbunden ist.

5. Räummaschine nach einem der Ansprüche 1 bis 4, dadurch gekennzeichnet
daß jedes Räumwerkzeug (6) mittels des Werkzeugmagazins (5) in Arbeitsposition bewegbar und dort mittels des CNC-Werkzeugmagazinantriebes fixierbar ist.
